# EUROPÄISCHE PATENTSCHRIFT

(11) **EP 1 355 550 B1**
(45) Veröffentlichungstag und Bekanntmachung des Hinweises auf die Patenterteilung: **26.10.2005**
(21) Anmeldenummer: 02716705.5
(22) Anmeldetag: 31.01.2002
(51) Int. Cl.: A44B 1/34, A44B 1/06, A44B 17/00, F16B 12/26, F16B 21/07

(54) **MAGNETVERSCHLUSS**
MAGNETIC CLOSURE
FERMETURE MAGNETIQUE

(30) Priorität: 01.02.2001 DE 10104833
(43) Veröffentlichungstag der Anmeldung: 29.10.2003
(73) Patentinhaber: Sánchez Giraldez, José Humberto, 21266 Jesteburg (DE)
(72) Erfinder: Sánchez Giraldez, José Humberto, 21266 Jesteburg (DE)
(74) Vertreter: Gerbaulet, Hannes
(86) Internationale Anmeldenummer: PCT/EP2002/001006
(87) Internationale Veröffentlichungsnummer: WO 2002/060292

(56) Entgegenhaltungen:
- EP-A- 0 436 862
- US-A- 3 638 285
- US-A- 4 425 771
- US-A- 5 077 872
- US-A- 5 600 977
- US-A- 5 937 487
- US-A- 6 084 498
- US-B1- 6 182 336

## Beschreibung

### Technisches Gebiet

Die Erfindung betrifft einen Magnetverschluss, enthaltend ein Kopfteil mit einem oder mehreren zwischen einer Verriegelungsposition und einer Öffnungsposition beweglichen Riegelelementen, und ein in das Kopfteil einsteckbares Sockelteil mit einer radialen Vertiefung, in welche die Riegelelemente in der Verriegelungsposition eingreifen können, um das Sockelteil im Kopfteil zu verriegeln, wobei die Riegelelemente durch eine von außen einwirkende Magnetkraft in die Öffnungsposition bewegt werden können, in der sie nicht in die Vertiefung eingreifen.

### Stand der Technik

Ein derartiger Magnetverschluss ist aus der DE-PS 19 42 535 bekannt. Ein typischer Anwendungsfall eines solchen Magnetverschlusses ist die Ausbildung von Knöpfen an Kleidungsstücken oder Gurten, welche nur mit einem Schlüssel zu öffnen sein sollen. Solche Knöpfe werden zum Beispiel bei medizinischen Bandagen oder zur Sicherheit von verwirrten Personen benötigt, um ein unbeabsichtigtes Öffnen des Verschlusses zu verhindern. Bei dem aus der DE -PS 19 42 535 bekannten Magnetverschluss sind im Kopfteil zwei spiegelbildlich angeordnete Riegelelemente kippbeweglich um einen jeweiligen Auflagepunkt angeordnet, wobei sie durch eine Feder in eine Verriegelungsposition vorgespannt werden. In dieser Verriegelungsposition greifen sie in die Ringnut eines in das Kopfteil eingesteckten Sockelteils ein. Durch einen speziellen Schlüssel oder durch einen von außen aufgesetzten Magneten können die Riegelelemente gegen die Federkraft gekippt werden, wodurch sie aus der Ringnut des Sokkelteils ausrasten und somit eine Trennung von Kopfteil und Sockelteil ermöglichen. Nachteilig bei dem bekannten Magnetverschluss ist jedoch, dass die Kippbewegung der Riegelelemente auch durch einen Stoß oder Schlag auf das Kopfteil ausgelöst werden kann, wodurch sich der Verschluss unerwünschterweise öffnen würde. Ferner kann der Verschluss mit quasi jedem beliebigen Magneten ausreichender Stärke geöffnet werden, so dass die Verriegelung auch unter diesem Aspekt nicht ausreichend sicher erscheint. Nachteilig ist ferner, dass die Kippbewegung der Riegelelemente eine entsprechend große Bauteillänge des Kopfteils erfordert. Nachteilig ist außerdem, dass durch schnelles Drehen des Kopfteils die erzeugten Fliehkräfte die Riegelelemente unerwünscht öffnen können.

### Darstellung der Erfindung, Aufgabe, Lösung, Vorteile

Vor diesem Hintergrund war es Aufgabe der vorliegenden Erfindung, einen Magnetverschluss der eingangs genannten Art derart zu verbessern, dass er eine größere Sicherheit der Verriegelung bietet.

Diese Aufgabe wird durch einen Magnetverschluss mit den Merkmalen des Anspruchs 1 gelöst. Vorteilhafte Ausgestaltungen sind in den Unteransprüchen enthalten.

Der Magnetverschluss enthält ein Kopfteil, in welchem ein oder mehrere Riegelelemente zwischen einer sogenannten Verriegelungsposition und einer sogenannten Öffnungsposition beweglich gelagert sind. Im Folgenden wird in der Formulierung von mehreren Riegelelementen ausgegangen, wobei im Rahmen der Erfindung jedoch auch eine Ausgestaltung mit nur einem Riegelelement möglich ist. Der Magnetverschluss enthält ferner ein Sockelteil, das in eine Einstecköffnung des Kopfteils einsteckbar ist und das eine radiale Vertiefung aufweist, in welche die Riegelelemente des Kopfteils eingreifen können, wenn sie sich in ihrer Verriegelungsposition befinden. Durch den Eingriff der Riegelelemente in die Vertiefung des Sockelteils wird das Sockelteil im Kopfteil verriegelt, das heißt, dass in diesem Zustand die Steckverbindung zwischen Kopfteil und Sockelteil sich nicht von alleine löst, auch nicht bei den genannten nachteiligen Merkmalen. Die Radien des Sockelteils liegen dabei definitionsgemäß senkrecht zu der Körperachse des Sockelteils, welche in Steckrichtung liegt. In der Regel wird das Sockelteil stiftförmig ausgebildet sein, wobei die Steckrichtung mit der Stiftachse übereinstimmt und die Radien die Radien des

Stiftes sind. Eine "radiale Vertiefung" ist in diesem Zusammenhang jedoch allgemein zu verstehen als jeder Rücksprung des Radius unter seinen Maximalwert. Eine "radiale Vertiefung" an einem Zylinder kann demnach sowohl durch eine Ringnut als auch durch den Bereich hinter einem ringförmigen Vorsprung gebildet werden. Wichtig ist, dass die Vertiefung eine Hinterschneidung am Sockelteil ausbildet, in welche die Riegelelemente des Kopfteils eingreifen können, um ein Zurückziehen des Sockelteils entgegen der Steckrichtung zu verhindern.

Die Riegelelemente des Kopfteils sind im Kopfteil so eingerichtet, dass sie durch eine von außen, das heißt von außerhalb des Kopfteils herrührende Magnetkraft in ihre Öffnungsposition bewegt werden können, wobei sie in der Öffnungsposition definitionsgemäß nicht in die Vertiefung am Sockelteil eingreifen. In der Öffnungsposition kann das Sockelteil daher entgegen der Steckrichtung wieder vom Kopfteil abgezogen und der Magnetverschluss hierdurch geöffnet werden.

Ein solcher Öffnungsmechanismus wird erfindungsgemäß dadurch erreicht, dass das Kopfteil einen drehbeweglich gelagerten Magneten mit mindestens zwei nach außen wirkenden Polen aufweist, das heißt mit solchen Polen, deren Magnetfeld in ausreichender Stärke in dem Raum außerhalb des Kopfteils eindringt, so dass eine Wechselwirkung zwischen einem außerhalb des Kopfteils befindlichen Schlüsselmagneten und dem im Kopfteil befindlichen Magneten möglich ist. Der im Kopfteil befindliche Magnet ist ferner mit den Riegelelementen so gekoppelt, dass durch eine Drehbewegung des Magneten die Riegelelemente von ihrer Verriegelungsposition in ihre Öffnungsposition überführt werden.

Anders als bei dem aus dem Stand der Technik bekannten Magnetverschluss findet die Überführung der Riegelelemente von der Verriegelungsposition in die Öffnungsposition nicht durch eine einfache, von außen einwirkende magnetische Anziehung statt. Es muss vielmehr eine bestimmte Drehbewegung des im Kopfteil befindlichen Magneten erfolgen, damit sich die Riegelelemente in die Öffnungsposition bewegen und sich der Magnetverschluss hierdurch öffnet. Eine solche Drehbewegung wird durch keinen wie auch immer gerichteten Stoß auf den Magnetverschluss erzeugt, da ein Stoß nur lineare Kräfte, jedoch keine Drehmomente erzeugen kann. Der erfindungsgemäße Magnetverschluss bietet somit eine sehr hohe Sicherheit gegen eine unbeabsichtigte Öffnung.

Des weiteren ist von Bedeutung, dass der im Kopfteil befindliche Magnet mindestens zwei nach außen wirkende Pole aufweist. Mit diesen Polen kann ein außerhalb des Kopfteils befindlicher Schlüsselmagnet wechselwirken, um ein für die Drehung des Magneten benötigtes Drehmoment zu übertragen. Dabei wird jeder Pol des Kopfteil-Magneten mit einem entgegengesetzten Pol des Schlüsselmagneten gekoppelt, also jeweils ein Nord- mit einem Südpol und umgekehrt. Um den Magnetverschluss öffnen zu können, muss der Schlüsselmagnet daher spiegelbildlich zum Kopfteil-Magneten ausgebildet sein, das heißt dort Nordpole aufweisen, wo der Kopfteil-Magnet einen Südpol hat und umgekehrt. Durch diese speziellen Anforderungen an die Geometrie des Schlüsselmagneten wird das unautorisierte Öffnen des Magnetverschlusses mit Hilfe eines beliebigen Magneten erschwert, wenn nicht unmöglich gemacht. Auch dieser Aspekt trägt zu einer erhöhten Sicherheit des erfindungsgemäßen Magnetverschlusses bei.

Gemäß einer bevorzugten Ausgestaltung des Magnetverschlusses sind die Riegelelemente so im Kopfteil gelagert, dass sie quer zur Steckrichtung des Sockelteils zwischen der Verriegelungsposition und der Öffnungsposition verschiebebeweglich sind. Da die Bewegung der Riegelelemente quer zur Steckrichtung stattfindet, kann das Kopfteil in der Steckrichtung mit einer verhältnismäßig kurzen Baulänge ausgebildet werden. Ferner hat die Querverschiebung der Ringelemente den Vorteil, dass diedass die Kippbewegung der Riegelelemente auch durch einen Stoß oder Schlag auf das Kopfteil ausgelöst werden kann, wodurch sich der Verschluss unerwünschterweise öffnen würde. Ferner kann der Verschluss mit quasi jedem beliebigen Magneten ausreichender Stärke geöffnet werden, so dass die Verriegelung auch unter diesem Aspekt nicht ausreichend sicher erscheint. Nachteilig ist ferner, dass die Kippbewegung der Riegelelemente eine entsprechend große Bauteillänge des Kopfteils erfordert. Nachteilig ist außerdem, dass durch schnelles Drehen des Kopfteils die erzeugten Fliehkräfte die Riegelelemente unerwünscht öffnen können.

### Darstellung der Erfindung, Aufgabe, Lösung, Vorteile

Vor diesem Hintergrund war es Aufgabe der vorliegenden Erfindung, einen Magnetverschluss der eingangs genannten Art derart zu verbessern, dass er eine größere Sicherheit der Verriegelung bietet.

Diese Aufgabe wird durch einen Magnetverschluss mit den Merkmalen des Anspruchs 1 gelöst. Vorteilhafte Ausgestaltungen sind in den Unteransprüchen enthalten.

Der Magnetverschluss enthält ein Kopfteil, in welchem ein oder mehrere Riegelelemente zwischen einer sogenannten Verriegelungsposition und einer sogenannten Öffnungsposition beweglich gelagert sind. Im Folgenden wird in der Formulierung von mehreren Riegelelementen ausgegangen, wobei im Rahmen der Erfindung jedoch auch eine Ausgestaltung mit nur einem Riegelelement möglich ist. Der Magnetverschluss enthält ferner ein Sockelteil, das in eine Einstecköffnung des Kopfteils einsteckbar ist und das eine radiale Vertiefung aufweist, in welche die Riegelelemente des Kopfteils eingreifen können, wenn sie sich in ihrer Verriegelungsposition befinden. Durch den Eingriff der Riegelelemente in die Vertiefung des Sockelteils wird das Sockelteil im Kopfteil verriegelt, das heißt, dass in diesem Zustand die Steckverbindung zwischen Kopfteil und Sockelteil sich nicht von alleine löst, auch nicht bei den genannten nachteiligen Merkmalen. Die Radien des Sockelteils liegen dabei definitionsgemäß senkrecht zu der Körperachse des Sockelteils, welche in Steckrichtung liegt. In der Regel wird das Sockelteil stiftförmig ausgebildet sein, wobei die Steckrichtung mit der Stiftachse übereinstimmt und die Radien die Radien des Stiftes sind. Eine "radiale Vertiefung" ist in diesem Zusammenhang jedoch allgemein zu verstehen als jeder Rücksprung des Radius unter seinen Maximalwert. Eine "radiale Vertiefung" an einem Zylinder kann demnach sowohl durch eine Ringnut als auch durch den Bereich hinter einem ringförmigen Vorsprung gebildet werden. Wichtig ist, dass die Vertiefung eine Hinterschneidung am Sockelteil ausbildet, in welche die Riegelelemente des Kopfteils eingreifen können, um ein Zurückziehen des Sockelteils entgegen der Steckrichtung zu verhindern.

Die Riegelelemente des Kopfteils sind im Kopfteil so eingerichtet, dass sie durch eine von außen, das heißt von außerhalb des Kopfteils herrührende Magnetkraft in ihre Öffnungsposition bewegt werden können, wobei sie in der Öffnungsposition definitionsgemäß nicht in die Vertiefung am Sockelteil eingreifen. In der Öffnungsposition kann das Sockelteil daher entgegen der Steckrichtung wieder vom Kopfteil abgezogen und der Magnetverschluss hierdurch geöffnet werden.

Ein solcher Öffnungsmechanismus wird erfindungsgemäß dadurch erreicht, dass das Kopfteil einen drehbeweglich gelagerten Magneten mit mindestens zwei nach außen wirkenden Polen aufweist, das heißt mit solchen Polen, deren Magnetfeld in ausreichender Stärke in dem Raum außerhalb des Kopfteils eindringt, so dass eine Wechselwirkung zwischen einem außerhalb des Kopfteils befindlichen Schlüsselmagneten und dem im Kopfteil befindlichen Magneten möglich ist. Der im Kopfteil befindliche Magnet ist ferner mit den Riegelelementen so gekoppelt, dass durch eine Drehbewegung des Magneten die Riegelelemente von ihrer Verriegelungsposition in ihre Öffnungsposition überführt werden.

Anders als bei dem aus dem Stand der Technik bekannten Magnetverschluss findet die Überführung der Riegelelemente von der Verriegelungsposition in die Öffnungsposition nicht durch eine einfache, von außen einwirkende magnetische Anziehung statt. Es muss vielmehr eine bestimmte Drehbewegung des im Kopfteil befindlichen Magneten erfolgen, damit sich die Riegelelemente in die Öffnungsposition bewegen und sich der Magnetverschluss hierdurch öffnet. Eine solche Drehbewegung wird durch keinen wie auch immer gerichteten Stoß auf den Magnetverschluss erzeugt, da ein Stoß nur lineare Kräfte, jedoch keine Drehmomente erzeugen kann. Der erfindungsgemäße Magnetverschluss bietet somit eine sehr hohe Sicherheit gegen eine unbeabsichtigte Öffnung.

Des weiteren ist von Bedeutung, dass der im Kopfteil befindliche Magnet mindestens zwei nach außen wirkende Pole aufweist. Mit diesen Polen kann ein außerhalb des Kopfteils befindlicher Schlüsselmagnet wechselwirken, um ein für die Drehung des Magneten benötigtes Drehmoment zu übertragen. Dabei wird jeder Pol des Kopfteil-Magneten mit einem entgegengesetzten Pol des Schlüsselmagneten gekoppelt, also jeweils ein Nord- mit einem Südpol und umgekehrt. Um den Magnetverschluss öffnen zu können, muss der Schlüsselmagnet daher spiegelbildlich zum Kopfteil-Magneten ausgebildet sein, das heißt dort Nordpole aufweisen, wo der Kopfteil-Magnet einen Südpol hat und umgekehrt. Durch diese speziellen Anforderungen an die Geometrie des Schlüsselmagneten wird das unautorisierte Öffnen des Magnetverschlusses mit Hilfe eines beliebigen Magneten erschwert, wenn nicht unmöglich gemacht. Auch dieser Aspekt trägt zu einer erhöhten Sicherheit des erfindungsgemäßen Magnetverschlusses bei.

Gemäß einer bevorzugten Ausgestaltung des Magnetverschlusses sind die Riegelelemente so im Kopfteil gelagert, dass sie quer zur Steckrichtung des Sockelteils zwischen der Verriegelungsposition und der Öffnungsposition verschiebebeweglich sind. Da die Bewegung der Riegelelemente quer zur Steckrichtung stattfindet, kann das Kopfteil in der Steckrichtung mit einer verhältnismäßig kurzen Baulänge ausgebildet werden. Ferner hat die Querverschiebung der Ringelemente den Vorteil, dass diese sich in Bezug auf das Sockelteil radial bewegen und somit besonders effektiv in die radiale Vertiefung des Sockelteils eingreifen können.

Während das Kopfteil grundsätzlich mit einem, mit zwei oder mit mehreren Riegelelementen ausgestaltet werden kann, ist eine Anordnung bevorzugt, bei welcher zwei Riegelelemente vorhanden sind, die spiegelbildlich zueinander angeordnet sind. Bei einer solchen Anordnung können die zwei Riegelelemente das Sockelteil zwischen sich aufnehmen und von zwei Seiten her symmetrisch in die radiale Vertiefung des Sockelteils eingreifen. Dies führt zu einem besonders sicheren und ausgeglichenen Verrasten des Sockelteils im Kopfteil. Die beiden Riegelelemente selbst können identisch ausgebildet sein, was den Herstellungsaufwand für den Magnetverschluss verringert.

Gemäß einer anderen bevorzugten Ausgestaltung des Magnetverschlusses weist das Kopfteil mindestens ein Federelement auf, welches so mit den Riegelelementen zusammenwirkt, dass es diese in die Verriegelungsposition vorspannt. Ohne die Einwirkung einer äußeren (Magnet-)Kraft werden die Riegelelemente somit ihre Verriegelungsposition annehmen. Beim Einstecken des Sockelteils in das Kopfteil gehen die Riegelelemente daher nach einem Zurückweichen oder Ausweichen automatisch ihre Verriegelungsposition, in der sie das Sockelteil im Kopfteil verrasten. Der Magnetverschluss kann daher ohne weitere Hilfsmittel geschlossen werden.

Vorzugsweise ist der im Kopfteil befindliche Magnet als Ringmagnet ausgebildet, welcher über eine Ring- oder Kreisfläche verteilt mindestens einen Nordpol und mindestens einen Südpol aufweist. Der Ringmagnet ist dabei drehbeweglich bezüglich der Ringachse im Kopfteil gelagert und weist Mitnehmer auf, über die er mechanisch an die Riegelelemente gekoppelt ist. Typischerweise sind die Mitnehmer als senkrecht (unmittelbar oder mittelbar) vom Ringmagneten abstehende Vorsprünge ausgestaltet. Die Riegelelemente sind vorzugsweise aus einem nicht-magnetisierbaren Material, wie zum Beispiel Aluminium, damit sie nicht durch die Magnetkräfte des Kopfteil-Magneten oder eines Schlüsselmagneten beeinflusst werden. Auf den Mitnehmer kann verzichtet werden, wenn der Ringmagnet so gestaltet ist, dass die Stifte direkt am Ringmagneten sind Der Ringmagnet kann auch eine andere Form aufweisen, z.B. Scheibe, Quadrat o.ä. jede andere beliebige Form, dadurch verändert sich beim Drehen der Magneten die Beschneidung der Pole.

Die radiale Vertiefung des Sockelteils wird vorzugsweise durch eine um das Sockelteil umlaufende Ringnut gebildet, welche von allen Seiten den Eingriff eines Riegelelementes erlaubt.

Die Steckverbindung zwischen dem Sockelteil und dem Kopfteil ist vorteilhafterweise verdrehsicher ausgebildet. Das heißt, dass das Sockelteil und das Kopfteil im zusammengesetzten Zustand - unabhängig vom Bestehen einen Verriegelung durch die Riegelelemente - bezüglich einer Drehung um die Steckrichtung arretiert sind.

Die genannte Verdrehsicherung zwischen Kopfteil und Sockelteil lässt sich insbesondere dadurch erreichen, dass das Sockelteil quer zur Steckrichtung einen nicht-kreisförmigen, vorzugsweise einen elliptischen oder mehreckigen (dreieckigen, viereckigen, fünfeckigen, ...) Querschnitt aufweist, und dass die zugehörige Einstecköffnung des Kopfteils zu diesem Querschnitt korrespondierend ausgebildet ist. Der Querschnitt der Einstecköffnung hat daher die gleiche geometrische Grundform, ist jedoch um das erwünschte Spiel für das Einstecken größer. Die Verdrehsicherung zwischen Kopfteil und Sockelteil hat den Vorteil, dass bei Übertragung eines Drehmomentes auf den im Kopfteil befindlichen Magneten sich das Kopfteil nicht mitdreht, wenn das Sockelteil drehfest befestigt ist. Beim Öffnen des Magnetverschlusses muss die Bedienperson daher nicht das Kopfteil mit einer Hand festhalten, während sie mit der anderen Hand den Schlüsselmagneten dreht, sondern es reicht das Aufsetzen und Drehen des Schlüsselmagneten. Der Magnetverschluss kann daher mit einer Hand geöffnet werden.

Das Sockelteil weist vorzugsweise einen Sockelschaft und einen Sockelfuß auf, wobei der Sockelschaft in das Kopfteil einsteckbar ist und der Sockelfuß verdrehsicher an einem Gurt, einem Kleidungsstück oder einem anderen Gegenstand, an dem der Magnetverschluss angewendet werden soll, befestigt werden kann. Durch die Möglichkeit, das Sockelteil verdrehsicher zu befestigen und durch die oben erläuterte verdrehsichere Ausgestaltung des Einsteckmechanismus zwischen Sockelteil und Kopfteil wird erreicht, dass das Kopfteil im aufgesteckten Zustand verdrehsicher gegenüber dem Trägergegenstand des Magnetverschlusses ist.

Eine verdrehsichere Befestigung des Sockelfußes wird insbesondere dadurch ermöglicht, dass der Sockelfuß nicht-kreisförmig, vorzugsweise elliptisch oder mehreckig ausgebildet wird. Ein solcher Sockelfuß lässt sich zum Beispiel in einer Tasche eines Kleidungsstückes oder Gurtes rundum einnähen und gewährleistet dann durch seine Form die Verdrehsicherheit. Ein direktes Befestigen des Sockelfußes durch Kleben oder Nieten am Kleidungsstück ist hierzu nicht erforderlich. Die Befestigung kann auch durch eine andere Formgebung z.B. Nuten oder Nocken oder jede andere Art von Befestigung erfolgen.

Im Folgenden wird die Erfindung mit Hilfe der Figuren beispielhaft erläutert. Es zeigt:
- Fig. 1: eine perspektivische Explosionsansicht des Magnetverschlusses 100;
- Fig. 2a und 2b: in einer schematischen Darstellung das Prinzip der magnetischen Verriegelung mit und ohne Feder;
- Fig. 3: in einer schematischen Darstellung das prinzipielle Zusammenwirken des Schlüsselmagneten und des Regelmagneten
- Fig. 4: eine Aufsicht auf einen Teil des Basiskörpers des Kopfteils;
- Fig. 5: einen Querschnitt durch das Kopfteil entlang der Linie III-III von Figur 2;
- Fig. 6: den Ringmagneten und den Mitnehmer im Querschnitt;
- Fig. 7: einen Querschnitt durch das an einem Gurt befestigte Sockelteil;
- Fig. 8: verschiedene Formen des Sockelfußes;
- Fig. 9: eine perspektivische Ansicht des an einem Gurt befestigten Sockelteils;
- Fig. 10: in schematischer Teildarstellung weitere Ausführungsformen des Magnetverschlusses.

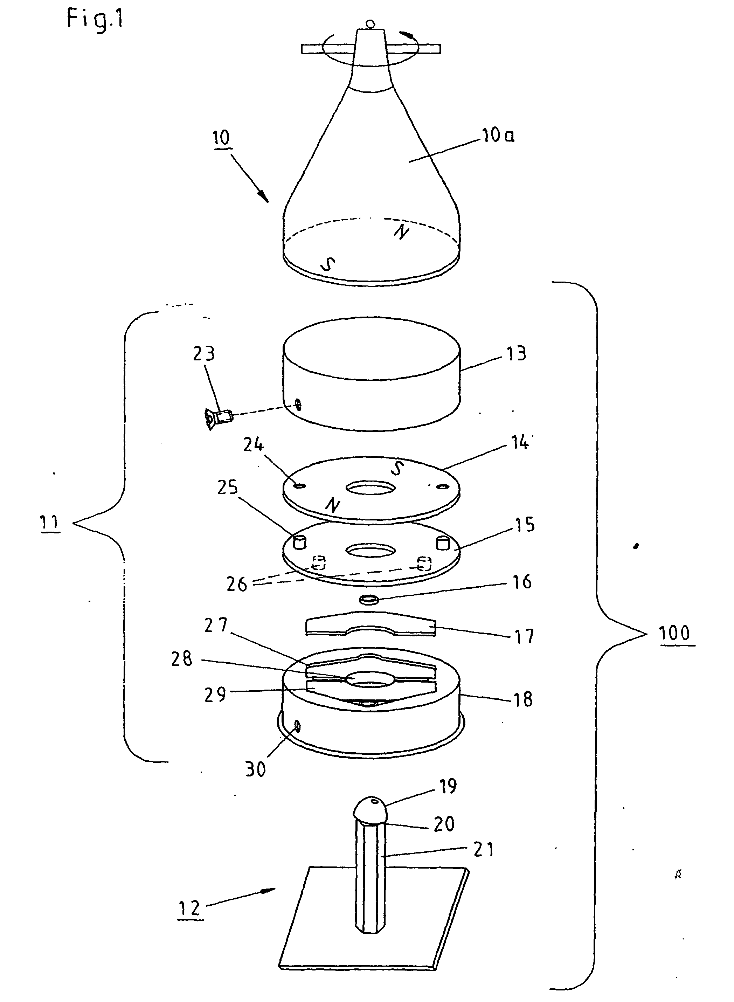

In Figur 1 ist der erfindungsgemäße Magnetverschluss in einer Explosionsansicht schematisch dargestellt. Der Magnetverschluss besteht im Wesentlichen aus einem Kopfteil 11 sowie einem Sockelteil 12. Das Kopfteil 11 kann auf das Sockelteil 12 aufgesteckt werden, wobei dann ein Rastmechanismus das Kopfteil am Sockelteil verriegelt. Erst durch Verwendung eines speziellen Schlüsselmagneten, der in Figur 1 durch einen plattenförmigen Magneten 10 und eine Handhabe 10 angedeutet ist, lässt sich die Verriegelung zwischen Kopfteil 11 und Sockelteil 12 aufheben und der Magnetverschluss 100 somit öffnen.

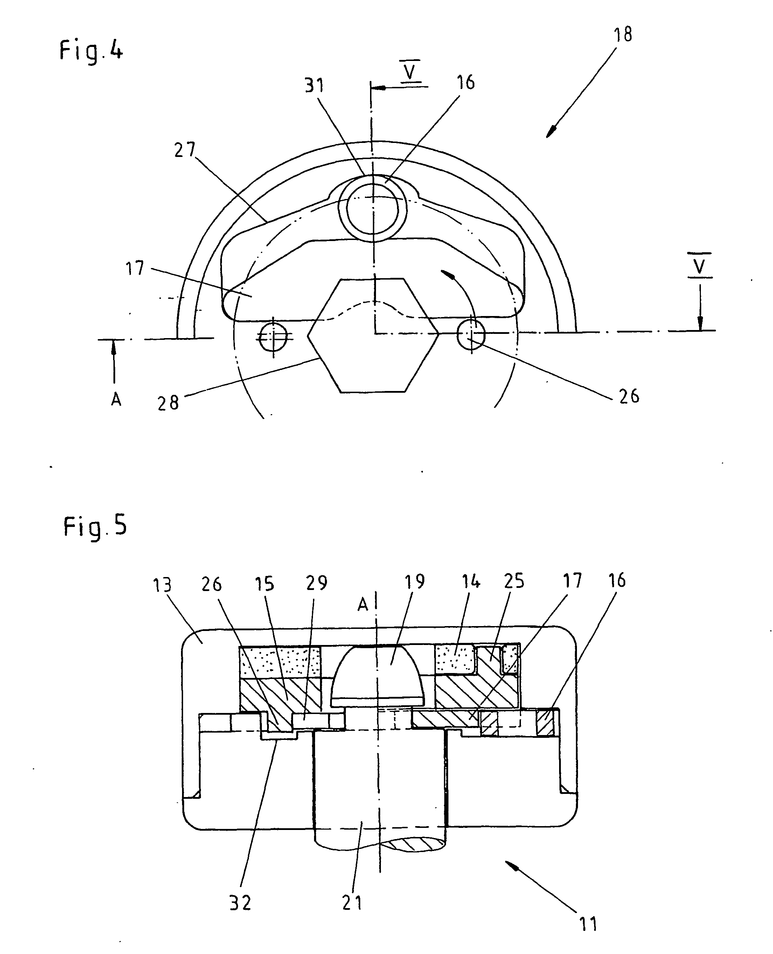

Das Sockelteil 12 besteht im Wesentlichen aus einem stiftförmigen Sokkelschaft 21, welcher im Querschnitt die Form eines regelmäßigen Sechsecks aufweist. Der Sockelschaft 21 ist mit seinem unteren Ende an einem rechteckigen Sockelfuß 22 befestigt. Der Sockelfuß 22 kann, wie mit Hilfe der Figuren 5 bis 7 detaillierter erläutert wird, zum Beispiel an einem Kleidungsstück befestigt werden. An seinem oberen Ende ist der Sockelschaft 21 durch einen Pilzkopf 19 zugespitzt ausgebildet, wobei unmittelbar unterhalb des Pilzkopfes eine Ringnut 20 verläuft.

Das Kopfteil 11 enthält zunächst einen im Wesentlichen zylindrischen Basiskörper 18, der mittig eine axiale Einstecköffnung 28 aufweist. Die Einstecköffnung 28 hat im Querschnitt die Form eines regelmäßigen Sechsecks, welches einen geringfügig größeren Durchmesser als der Sockelschaft 21 hat, so dass der Sockelschaft 21 mit leichtem Spiel in die Einstecköffnung 28 eingesteckt werden kann. Durch die sechseckige Ausbildung der Querschnitte von Sockelschaft 21 und Einstecköffnung 28 wird eine Verdrehsicherung zwischen Kopfteil 11 und Sockelteil 12 erreicht.

An seinem in Figur 1 oberen Stirnende weist der Basiskörper 18 eine Führungsvertiefung 27 auf, welche im Wesentlichen als liniensymetrische bezeichnet werden kann. In den beiden symmetrischen Hälften der Führimgsvertlefung 27 sind spiegelbildlich zueinander die Riegelelemente 17 und 29 angeordnet. Die Riegelelemente 17 und 29 sind so ausgebildet, dass sie in der in Figur 1 für das Riegelelement 29 dargestellten Verriegelungsposition teilweise in den Bereich der Einstecköffnung 28 hineinragen. Wenn der Sockelschaft 21 in die Einstecköffnung 28 eingeführt wird, drückt die Form der Sockelspitze (Pilzkopf) die federbelasteten Riegelemente 17 und 29 zurück. Wenn dann der Sockelschaft 21 in die Einstecköffnung 28 ganz eingeführt ist, steht der Pilzkopf 19 über das obere Stirnende des Basiskörpers 18 hinaus, und die Riegelelemente 17 und 29 greifen in ihrer Verriegelungsposition in die Ringnut 20 des Sockelteils 12 ein. Ein Zurückziehen des Sockelteils 12 aus dem Kopfteil 11 wird daher verhindert, da der Pilzkopf 19 auf den Riegelelementen 17 und 29 aufsitzt. Ein Zurückziehen wird erst dann möglich, wenn die Riegelelemente 17 und 29 durch eine seitliche Verschiebung so weit zur Seite bewegt worden sind, dass sie die Ringnut 20 verlassen und den Pilzkopf 19 nicht mehr hintergreifen.

Die Vertiefung 27 am oberen Stirnende des Basiskörpers 18 ist so ausgebildet, dass sie die beschriebene Verschiebung der Riegelelemente 17 und 29 zwischen der Verriegelungsposition und einer Öffnungsposition ermöglichen. Zwischen den Riegelelementen 17 und 29 und dem Rand der Vertiefung 27 sind dabei zwei komprimierbare Gummiringe 16 vorgesehen, welche die Riegelelemente in ihre jeweilige Verriegelungsposition vorspannen. Bei einem Einstecken des Sockelschaftes 21 in die Einstecköffnung 28 drückt der Pilzkopf 19 die Riegelelemente 17 und 29 gegen die elastische Kraft der Gummiringe 16 beiseite, bis die Ringnut 20 die Höhe der Riegelelemente erreicht. Sobald Letzteres der Fall ist, können die Riegelelemente 17 und 29 der Kraft der Gummiringe 16 folgend wieder zum Mittelpunkt der Einstecköffnung 28 vorrücken, wobei sie in die Ringnut 20 am Sockelteil 12 eingreifen und das Sockelteil hierdurch im Kopfteil 11 verrasten.

Um die beschriebene Verriegelung des Sockelteils 12 im Kopfteil 11 auf Wunsch wieder aufheben zu können, ist ein Magnetmechanismus mit dem Ringmagneten 14 und dem Mitnehmer 15 vorgesehen. Der Mitnehmer 15 besteht aus einem flachen Ring, welcher oberhalb des oberen Stirnendes des Basiskörpers 18 flach anliegend angeordnet wird. Der Mitnehmer 15 hat an seiner Unterseite zwei nach unten abstehende Stifte 26, welche in den Spalt zwischen den beiden Riegelelementen 17 und 29 eingreifen. Bei einer Drehung des Mitnehmers 15 um seine Ringachse drückt einer der Stifte 26 das Riegelelement 17 zur einen Seite und der andere Stift 26 das andere Riegelelement 29 zur entgegengesetzten Seite. Die Riegelelemente 17 und 29 werden somit bei einer Drehbewegung des Mitnehmers 15 schräg auseinander gedrückt und in ihre jeweilige Öffnungsposition überführt. Durch eine Drehung des Ringmagneten 14 kann daher eine bestehende Verriegelung des Sockelteils 12 im Kopfteil 11 aufgehoben und der Magnetverschluss 100 geöffnet werden.

Die Drehung des Mitnehmers 15, welcher typischerweise aus einem nicht magnetischen Metall wie zum Beispiel Aluminium besteht, erfolgt mit Hilfe des Ringmagneten 14. Der Ringmagnet 14 weist zwei Löcher 24 auf, in welche nach oben vom Mitnehmer 15 abstehende Stifte 25 eingreifen, um eine drehfeste Kopplung zwischen Ringmagnet 14 und Mitnehmer 15 herzustellen. Der Ringmagnet 14 hat wie dargestellt mindestens zwei Magnetpole N und S, deren Magnetfelder in den Bereich außerhalb des Kopfteils 11 dringen, so dass von außen eine Wechselwirkung mit diesen Polen möglich ist. Eine solche Wechselwirkung findet mit Hilfe eines Schlüsselmagneten 10 statt, welcher in Figur 1 als eine kreisförmige Platte mit den zwei Polen N und S angedeutet ist. Vorzugsweise befindet sich ein solcher Magnet am Ende vordrehgesichert eines gut handhabbaren Halterung oder Stiftes (nicht dargestellt). Wichtig ist, dass der Schlüsselmagnet 10 dort einen Südpol aufweist, wo der Ringmagnet 14 einen Nordpol hat und umgekehrt. Wenn der Schlüsselmagnet 10 dann so in die Nähe des Ringmagneten 14 gebracht wird, dass sich ungleiche Magnetpole gegenüberstehen, findet eine berührungslose Kraftkopplung zwischen dem Ringmagneten 14 und dem Schlüsselmagneten 10 statt, über die sich insbesondere ein Drehmoment bezüglich der Ringachse des Ringmagneten 14 ausüben lässt. Das heißt, dass durch eine Drehung des Schlüsselmagneten 10 der Ringmagnet 14 mitgedreht wird, wobei der Ringmagnet 14 diese Drehung wiederum auf den Mitnehmer 15 überträgt. Die Stifte 26 des Mitnehmers 15 drücken dann in der oben beschriebenen Weise die Riegelelemente 17 und 29 zur Seite und in ihre Öffnungsposition. Im Ergebnis kann daher der Magnetverschluss 100 durch eine Drehung des Schlüsselmagneten 10 von außen geöffnet werden, wobei die Drehrichtung beliebig ist.

Das zusammengesetzte Kopfteil 11 ist nach außen hin durch einen topfförmigen Deckel 13 abgeschlossen. Der Deckel 13 ist mit Schrauben 23 in Schraublöchem 30 des Basiskörpers 18 verschraubt.

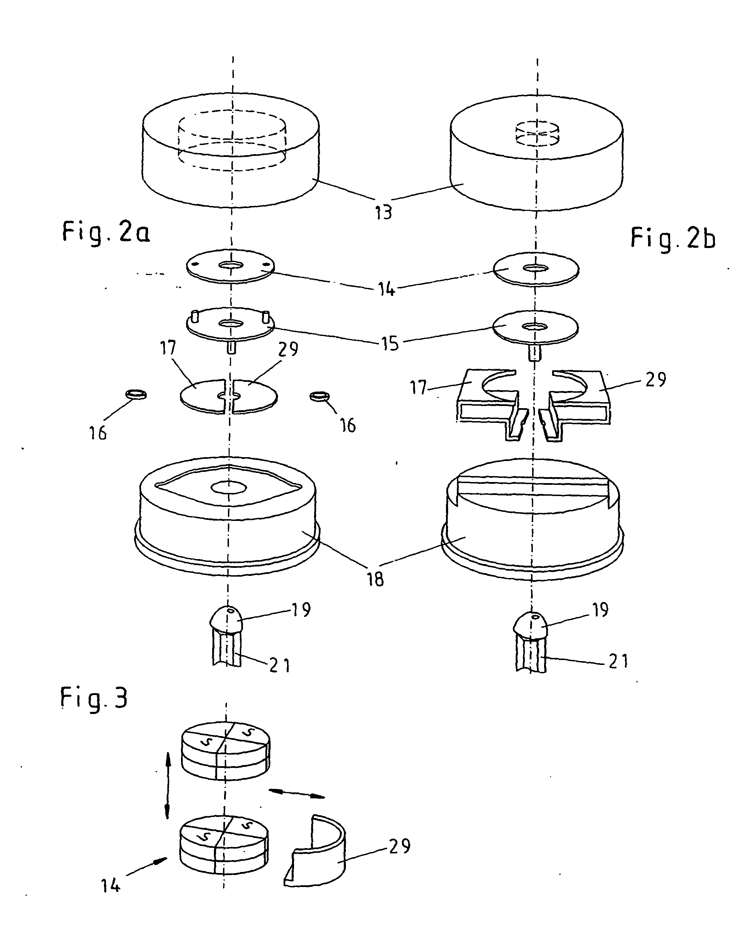

In Fig. 2a und 2b ist das Prinzip der magnetischen Verriegelung mit und ohne Feder dargestellt. Bei der Ausführungsform mit Feder (hier Gummiringe 16) werden die Riegelbleche 17, 29 durch die vorgespannten Gummiringe 16 geschlossen. Bei der Ausführungsform ohne Feder werden die Riegelbleche 17, 29 durch die vorgespannten Gummiringe 16 geschlossen. Bei der Ausführungsform ohne Feder werden die Riegelbleche 17, 19 durch die magnetische Anziehungskraft radial des Ringmagneten 14 geschlossen.

In Fig. 3 ist das Prinzip des magnetischen Sicherheitsverschluß (Knopf) im Hinblick auf den Schließmechanismus dargestellt. Dabei ist der Magnet als mehrpoliger Ring- oder Stabmagnet ausgebildet. Damit werden zwei Funktionen gleichzeitig erreicht:
1. Die axiale Anziehungskraft zur Übertragung eines Drehmoment, ausgelöst durch einen zweiten, als Schlüssel benutzten Magneten.
2. Die radiale Anziehungskraft in der horizontalen Richtung. Diese Anziehungskraft zieht die Riegelbleche an und gibt somit eine Vorspannung auf diese. Dadurch wird eine gesonderte Feder nicht mehr benötigt.

In Figur 4 ist eine Aufsicht auf das in Figur 1 obere Stirnende des Basiskörpers 18 gezeigt, wobei nur eine der beiden symmetrischen Hälften genauer dargestellt ist. Zu erkennen ist die im Wesentlichen fünfeckige Vertiefung 27, die im oberen Stirnende des Basiskörpers 18 ausgebildet ist. In der Vertiefung 27 ist das Riegelelement 17 gelagert, welches sich in Figur 2 in der Verriegelungsposition befindet, in der es teilweise in die sechseckige Einstecköffnung 28 hineinragt. An der der Einstecköffnung 28 gegenüberliegenden Seite des Riegelelementes 17 liegt ein Gummiring 16 an, welcher das Riegelelement 17 in die dargestellte Verriegelungsposition vorspannt. Zur unverrückbaren Lagerung des Gummiringes 16 ist in dem Rand der Vertiefung 27 eine Rundung 31 ausgebildet.

Des weiteren sind in Figur 4 die Stifte 26 des Mitnehmers 15 im Schnitt erkennbar, welche in den Raum zwischen den beiden Riegelelementen hineinstehen. Bei einer Drehung des Mitnehmers um die Achse der Einstecköffnung 28 gegen den Uhrzeigersinn drückt der in Figur 2 rechte Stift 26 das Riegelelement 17 auf einer durch einen Pfeil dargestellten Kreisbahn beiseite. Unter Kompression des Gummiringes 16 dreht sich dabei das Riegelelement 17 um seinen in Figur 2 linken Eckpunkt und kann so in seine Öffnungsposition überführt werden, in welcher es nicht mehr in den Bereich der Einstecköffnung 28 hineinragt. In ähnlicher Weise wird bei einer Drehung des Mitnehmers auch das in Figur 2 nicht dargestellte andere Riegelelement aus dem Bereich der Einstecköffnung 28 herausgeschwenkt.

Figur 5 zeigt das Kopfteil 11 in einem Schnitt entlang der Linie V-V von Figur 4 mit eingestecktem Sockelschaft 21. Zu erkennen ist, dass die Riegelelemente 17 und 29 in die Ringnut zwischen dem Pilzkopf 19 und dem Sockelschaft 21 eingreifen und somit das Sockelteil gegen ein Herausziehen nach unten verriegeln. Ferner ist erkennbar, dass der Gummiring 16 das Riegelelement 17 in die dargestellte Verriegelungsposition drückt.

Im linken Teil von Figur 5 ist aufgrund der entsprechenden Führung des Schnittes erkennbar, wie der Stift 26 des Mitnehmers 15 in den Spalt zwischen den beiden Riegelelementen 17 und 29 eingreift. Ferner ist erkennbar, dass sich unterhalb des Stiftes 26 eine Nut 32 befindet, welche ringförmig um die Achse A der Einstecköffnung fortsetzt. In dieser Ringnut 32 werden die Stifte 26 nicht geführt, sondern sie dient als Feinsteich; die Führung erfolgt durch den Außendurchmesser des Mitnehmers.

Oberhalb des Mitnehmers 15 ist der Ringmagnet 14 erkennbar, welcher über Stifte 25 mit dem Mitnehmer 15 gekoppelt ist.

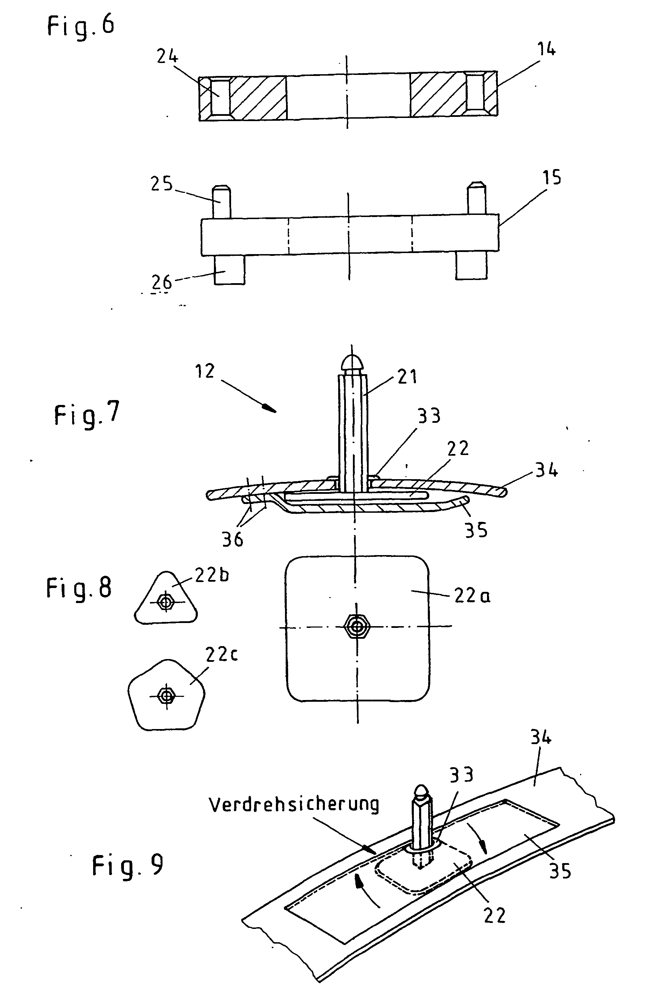

In Figur 6 sind der Mitnehmer 15 und der Ringmagnet 14 in einer seitlichen Querschnittansicht dargestellt, wobei wiederum die Stifte 25 des Mitnehmers 15 erkennbar sind, welche in die zugehörigen Löcher 24 des Ringmagneten 14 eingreifen.

Figur 7 zeigt in einem seitlichen Querschnitt das Sockelteil 12, welches in einer Sockeltasche 35 eines Gurtes 34 verdrehsicher angeordnet ist. Figur 9 zeigt die entsprechende Anordnung in einer perspektivischen Aufsicht. Die Sockeltasche 35 folgt mit ihren Nähten 36 im Wesentlichen der Umrandung des quadratischen Sockelfußes 22, wodurch dieser verdrehsicher am Gurt 34 befestigt wird. Der nach oben senkrecht vom Sockelfuß 22 abstehende Sockelschaft 21 zeigt durch eine Öse 33 der Sockeltasche 35.

Durch die sechseckige Form von Sockelschaft 21 und Einstecköffnung 28 des Kopfteils 11 wird erreicht, dass die beiden Teile im zusammengesteckten Zustand verdrehsicher aufeinander sitzen. Durch die verdrehsichere Befestigung des Sockelfußes 22 in der Sockeltasche 35 wird darüber hinaus das gesamte Sockelteil 12 verdrehsicher am Gurt 34 befestigt. Dies hat den Vorteil, dass die Übertragung eines Drehmomentes von einem Schlüsselmagneten 10 auf den Ringmagneten 14 im Kopfteil 11 nur den Ringmagneten dreht, nicht jedoch den Rest des Kopfteils 11, da dieses relativ zum Gurt 34 verdrehsicher befestigt ist.

In Figur 8 sind ein quadratischer Sockelfluß 22a, ein dreieckiger Sockelfuß 22b und ein fünfeckiger Sockelfuß 22c dargestellt. Die genannten Formen eignen sich dazu, den Sockelfuß in einer entlang des Randes des Fußes vemähten Sockeltasche verdrehsicher zu befestigen.

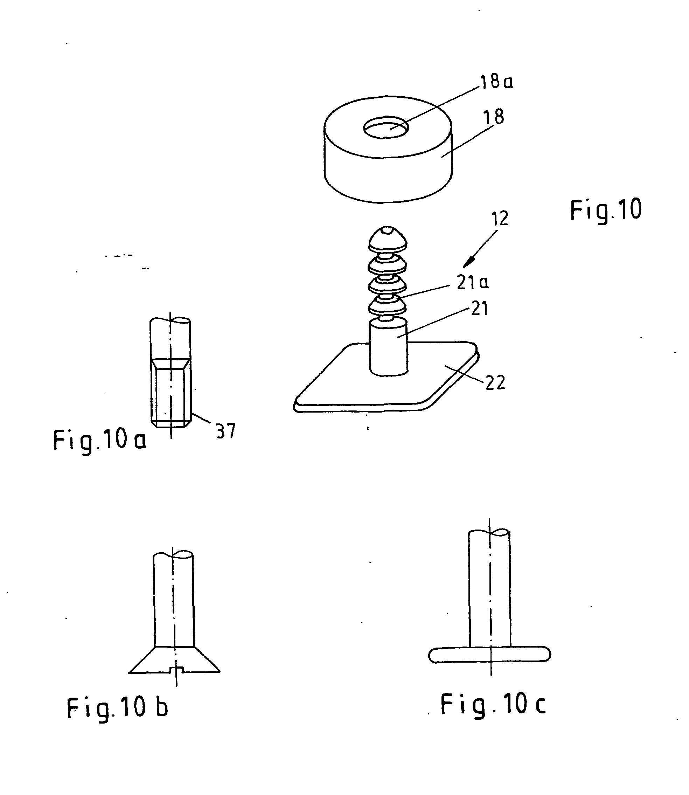

In Fig. 10 sind verschiedene Ausführungen des Sockelteils 12 dargestellt. Hierbei weist das Gehäuse 18 (als Magnetknopf) eine Durchgangsbohrung 18a und der Sockelschaft 21 mehrere Nuten 21 a auf. Der Sockelschaft 21 kann auch mit einem Gewinde 37 anstelle der Sockelplatte 22 versehen sein (Fig. 10a). Es ist auch möglich, einen Senkkopf (Fig. 10b) oder einen Flachkopf (Fig. 10c) vorzusehen.

### Bezugszeichen:

- 100: Magnetverschluss
- 10: Schlüsselmagnet
- 11: Kopfteil
- 12: Sockelteil
- 13: Deckel
- 14: Ringmagneten
- 15: Mitnehmer
- 16: Gummiring
- 17: Riegelelement
- 18: Basiskörper
- 18a: Durchgangsbohrung
- 19: Pilzkopf
- 20: Ringnut
- 21: Sockelschaft
- 21 a: Nuten
- 22: Sockelfuß
- 23: Schraube
- 24: Loch
- 25: Stift
- 26: Stift
- 27: Vertiefung
- 28: Einstecköffnung
- 29: Riegelelement
- 30: Schraubloch
- 31: Rundung
- 32: Ringnut
- 33: Öse
- 34: Gurt
- 35: Sockeltasche
- 36: Nähte
- 37: Gewinde

## Patentansprüche

1. Magnetverschluss (100), enthaltend:
- ein Kopfteil (11) mit einem oder mehreren zwischen einer Verriegelungsposition und einer Öffnungsposition beweglichen Riegelelementen (17, 29), und
- ein in das Kopfteil einsteckbares Sockelteil (12) mit einer radialen Vertiefung (20), in welche die Riegelelemente in der Verriegelungsposition eingreifen können, um das Sokkelteil im Kopfteil zu verriegeln,
wobei die Riegelelemente durch eine von außen einwirkende Magnetkraft in die Öffnungsposition bewegt werden können, in der sie nicht in die Vertiefung (20) eingreifen,
**dadurch gekennzeichnet, dass**
das Kopfteil (11) einen drehbeweglich gelagerten Magneten (14) mit mindestens zwei mehrpolig gegenüberliegend nach außen wirkenden Polen (N, S) aufweist, der so mit den Riegelelementen (17, 29) gekoppelt ist, dass durch eine Drehbewegung des Magneten (14) die Riegelelemente (17, 29) von der Verriegelungsposition in die Öffnungsposition überführt werden.

2. Magnetverschluss nach Anspruch 1,
**dadurch gekennzeichnet, dass** die Riegelelemente (17, 29) quer zur Steckrichtung des Sockelteils (12) beweglich gelagert sind.

3. Magnetverschluss nach Anspruch 1 oder 2,
**dadurch gekennzeichnet, dass** das Kopfteil (11) zwei spiegelbildlich zueinander angeordnete Riegelelemente (17, 29) aufweist.

4. Magnetverschluss nach mindestens einem der Ansprüche 1 bis 3,
**dadurch gekennzeichnet, dass** das Kopfteil (11) mindestens ein Federelement (16) zum Vorspannen der Riegelelemente (17, 29) in die Verriegelungsposition aufweist.

5. Magnetverschluss nach mindestens einem der Ansprüche 1 bis 4,
**dadurch gekennzeichnet, dass** der Magnet ein Ringmagnet (14) ist, welcher bezüglich seiner Ringachse drehbeweglich gelagert und über Mitnehmer (15, 25, 26) an die Riegelelemente (17, 29) gekoppelt ist.

6. Magnetverschluss nach mindestens einem der Ansprüche 1 bis 5,
**dadurch gekennzeichnet, dass** die radiale Vertiefung des Sockelteils (12) durch eine Ringnut (20) gebildet wird.

7. Magnetverschluss nach mindestens einem der Ansprüche 1 bis 6,
**dadurch gekennzeichnet, dass** die Steckverbindung zwischen Sockelteil (12) und Kopfteil (11) verdrehsicher ausgebildet ist.

8. Magnetverschluss nach Anspruch 7,
**dadurch gekennzeichnet, dass** das Sockelteil einen nicht-kreisförmigen, vorzugsweise elliptischen oder mehreckigen Querschnitt aufweist, und dass die zugehörige Einstecköffnung des Kopfteils (11) hierzu korrespondierend ausgebildet ist.

9. Magnetverschluss nach mindestens einem der Ansprüche 1 bis 8,
**dadurch gekennzeichnet, dass** das Sockelteil (12) einen Sockelschaft (21) und einen Sockelfuß (22) enthält, wobei der Sockelfuß verdrehsicher an einem Gurt (34), einem Kleidungsstück oder dergleichen befestigbar ist.

10. Magnetverschluss nach Anspruch 9,
**dadurch gekennzeichnet, dass** der Sockelfuß (22) nicht-kreisförmig, vorzugsweise elliptisch oder mehreckig ausgebildet ist.

## Claims

1. Magnetic lock (100) comprising:
- a head part (11) with one or several locking elements (17, 29) movable between a locking position and an opening position and
- a base part (12) which can be plugged into the head part with a radial recess (20) into which the locking elements can engage in the locking position in order to lock the base part in the head part,
whereby the locking elements can be moved by a magnetic force acting from outside into the opening position in which they cannot engage into the recess (20),
**characterized in that**
the head part (11) has a magnet (14) positioned movable rotationally with at least two poles (N, S) multipolarly opposite acting outwards, this magnet being coupled with the locking elements (17, 29) in such a way that the locking elements are transferred by a rotational movement of the magnet (14) from the locking position to the opening position.

2. Magnetic lock according to claim 1,
**characterized in that** the locking elements (17, 29) are positionned movable transversely to the plugging direction of the base part (12).

3. Magnetic lock according to claim 1 or 2,
**characterized in that** the head part (11) has two locking elements (17, 29) placed laterally reversed to each other.

4. Magnetic lock according to at least one of the claims 1 to 3,
**characterized in that** the head part (11) has at least one spring element (16) for pretensioning the locking elements (17, 29) in the locking position.

5. Magnetic lock according to any of the claims 1 to 4,
**characterized in that** the magnet is a ring magnet (14) which is positioned rotationally movable to its ring axis and which is coupled over drivers (15, 25, 26) to the locking elements (17, 29).

6. Magnetic lock according to any of the claims 1 to 5,
**characterized in that** the radial recess of the base part (12) is formed by a ring groove (20).

7. Magnetic lock according to any of the claims 1 to 6,
**characterized in that** the plug-in connection between the base part (12) and the head part (11) is configured resistant to torsion.

8. Magnetic lock according to claim 7,
**characterized in that** the base part has a non circular cross section, preferably an elliptic or polygonal cross section and that the associated plug-in opening of the head part (11) is configured corresponding to this part.

9. Magnetic lock according to at least any of the claims 1 to 8,
**characterized in that** the base part (12) contains a base shank (21) and a base foot (22), whereby the base foot can be fixed resistant to torsion to a belt (34), a garment or the like.

10. Magnetic lock according to claim 9,
**characterized in that** the base foot (22) is configured non circular, preferably elliptic or polygonal.

## Revendications

1. Fermeture magnétique (100) comprenant :
- une partie tête avec un ou plusieurs éléments de verrouillage (17, 29) mobiles entre une position de verrouillage et une position d'ouverture et
- une partie socle (12) pouvant être emboîtée dans la partie tête avec un évidement radial (20) dans lequel les éléments de verrouilage peuvent s'engrener en position de verouillage pour verrouiller la partie socle dans la partie tête,
les éléments de verrouillage pouvant être déplacés par une force magnétique qui agit de l'extérieur dans la position d'ouverture dans laquelle ils ne s'engrènent pas dans l'évidement (20),
**caractérisée en ce**
**que** la partie tête 811) présente un aimant (14) positionné mobile en rotation avec au moins deux pôles (N, S) opposés multipolairement agissant vers l'extérieur, cet aimant étant couplé avec les éléments de verrouillage (17, 29) de telle manière que les éléments de verrouillage (17, 29) sont transferés par un mouvement de rotation de l'aimant (14) de la position de verrouillage à la position d'ouverture.

2. Fermeture magnétique selon la revendication 1,
**caractérisée en ce que** les éléments de verrouillage (17, 29) sont positionnés mobiles transversalement par rapport au sens de l'emboîtement de la partie socle (12).

3. Fermeture magnétique selon la revendication 1 ou 2,
**caractérisée en ce que** la partie tête (11) présente deux éléments de verrouillage (17, 29) placés de manière symétrique inversée l'un par rapport à l'autre.

4. Fermeture magnétique selon au moins l'une des revendications 1 à 3,
**caractérisée en ce que** la partie tête (11) présente au moins un élément à ressort (16) pour précontraindre les éléments de verrouillage (17, 29) dans la position de verrouillage.

5. Fermeture magnétique selon au moins l'une des revendications 1 à 4,
**caractérisée en ce que** l'aimant est un aimant en forme d'anneau (14) qui est positionné mobile en rotation par rapport à son axe d'anneau et qui est couplé aux éléments de verrouillage (17, 29) par des entraîneurs (15, 25, 26).

6. Fermeture magnétique selon au moins l'une des revendications 1 à 5,
**caractérisée en ce que** l'évidement raidal de la partie socle (12) est formé par une rainure annulaire (20).

7. Fermeture magnétique selon au moins l'une des revendications 1 à 6,
**caractérisée en ce que** l'assemblage par emboîtement entre la partie socle (12) et la partie tête (11) est configuré résistant à la torsion.

8. Fermeture magnétique selon la revendication 7,
**caractérisée en ce**
**que** la partie socle présente une section non circulaire, de préférence elliptique ou polygonale, et que l'ouverture d'emboîtement associée de la partie tête (11) est configurée correspondante à celle-ci.

9. Fermeture magnétique selon au moins l'une des revendications 1 à 8,
**caractérisée en ce**
**que** la partie socle (12) contient une tige de socle (21) et un pied de socle (22), le pied de socle pouvant être fixé de manière résistante à la torsion à une ceinture (34), un vêtement ou équivalent.

10. Fermeture magnétique selon la revendication 9,
**caractérisée en ce**
**que** le pied de socle (22) est configuré non circulaire, de préférence elliptique ou polygonal.
